# EUROPEAN PATENT SPECIFICATION

(11) **EP 1 919 839 B1**
(45) Date of publication and mention of the grant of the patent: **25.02.2015**
(21) Application number: 05792298.1
(22) Date of filing: 12.09.2005
(51) Int. Cl.: C04B 5/00, C04B 28/08

(54) **A PROCESS FOR CONVERSION OF BASIC OXYGEN FURNACE SLAG INTO CONSTRUCTION MATERIALS**
VERFAHREN ZUR UMWANDLUNG VON SAUERSTOFFAUSBLASKONVERTERSCHLACKE IN BAUMATERIALIEN
PROCEDE DE CONVERSION DE LAITIER BASIQUE DE FOURNEAU A OXYGENE EN MATERIAUX DE CONSTRUCTION

(30) Priority: 29.07.2005 IN KA06882005
(43) Date of publication of application: 14.05.2008
(73) Proprietor: Tata Steel Limited, Jamshedpur 831 001 (IN)
(72) Inventor: THAKUR,S.K, Jamshedpur 831 001 (IN); CHANDRA, Sanjay, Jamshedpur 831 001 (IN); PRADHAN, R.,K., Jamshedpur 831 001 (IN); MUKHERJEE, T., Jamshedpur 831 001 (IN); CHATTERJEE, Amit, Jamshedpur 831 001 (IN); REDDY, A.S., Jamshedpur 831 001 (IN); HALDER, Jayanta, Jamshedpur 831 001 (IN)
(74) Representative: Radkov, Stoyan Atanassov
(86) International application number: PCT/IN2005/000307
(87) International publication number: WO 2007/013087

(56) References cited:
- JP-A- 7 062 346
- JP-A- 07 062 346
- JP-A- 08 012 387
- JP-A- 51 028 815
- JP-A- 61 048 446
- JP-A- 2001 294 452
- JP-A- 2002 338 313
- JP-B2- 51 020 535
- US-A- 4 185 997

## Description

### FIELD OF APPLICATION

The present invention relates to a process for conversion of basic oxygen furnace slag into construction material like hydraulic binder in masonry blocks flat sheets and tiles, and as a blend in cement manufacture and as a mortar for various other applications.

### BACKGROUND OF THE INVENTION

During the production of steel, there is a generation of waste in the form of slag. The tonnage of slag generated varies with the process of steel production. It is typically between 10 to 20% of the steel produced. Nearly 100 million tonnes of steel making slags are produced annually worldwide. Depending on the type of hot metal and / or steel making practice adopted, the following compounds may be present in basic oxygen furnace slag.
CaO - 45-55%
Fe - 16-20%
SiO₂ - 14-16%
P₂O₅ - 2.5-3.5%, etc.

This slag is generally put to low-end uses such as land filling, road making, ballast, etc. directly or subsequently to some treatment. Since steel slags contain significant amounts of CaO, oxides of silica and iron, such low-end applications do not do justice to its potential usage.

The recycling of this slag into iron making processes is restricted because of its higher proportion of P₂O₅. The P₂O₅ content of the basic oxygen furnace slag can be in the range of 2 to 3.5% based on the steel making practice.

If this slag is recycled into blast furnace as flux the P₂O₅ content will virtually report to the blast furnace hot metal. In other words the phosphorus content of the hot metal will increase. At the same time the fact that nearly half of the slag is made up of CaO and nearly one-fifth of iron oxide(s), implies that it could be put to use more profitably than done hitherto.

JP 2002 3388313 is directed to a method of manufacturing a lag which is intended to charge civil work material and high strength steelmaking slag using high strength steelmaking slag with high compressive strength.

JP7062346 describes a method of manufacturing a roadbed material from steelmaking slag, and an improved method of manufacturing an inexpensive and efficient while at the same time stable roadbed material from steelmaking slag.

JP2001 294452 describes a processing method of molten slag which makes it possible not to be contained in a cement product while at the same time improve product strength and its quality.

### SUMMARY OF THE INVENTION

The main object of the present invention therefore, is to put basic oxygen furnace slag to more profitable use than done hitherto.

Another object of the present invention is to process the liquid basic oxygen furnace slag, a waste material generated during steel making, to obtain cementitious properties suitable for various construction applications.

These and other objects of the present invention are achieved by increasing the fluidity of the molten slag during slag off from steel converter and allowing the carry over steel to settle at the bottom. This can be done by adding fluorspar (calcium fluoride) to the molten slag.

The liquid slag can then be cooled by granulation or by direct quenching in a pool of water. By rapid quenching the phases and their morphology can be managed which enables the slag to have better cementitions properties.

Thus the present invention provides a process for conversion of basic oxygen furnace slag into construction materials like hydraulic binder in masonry blocks, flats sheets, bricks and tiles and as a blend in cement manufacture and as a mortar in various applications, said process comprising the steps of: adding required quantity of fluorspar for increasing the fluidity of molten slag; cooling the liquid slag; crushing the slag to -3 mm size; separating the metallic fraction of the slag using a magnetic separator and grinding the non-metallic fraction to about 3000 to 4000 blain depending upon its application. In particular the present invention provides a process according claims 1 to 7 as follows:
1. A process for the conversion of basic oxygen furnace (BOF) slag into construction materials, a blend in cement manufacture and a mortar, said process comprising the steps of:
   - adding 0 - 3 % of fluorspar to the molten slag for increasing the fluidity of said molten slag;
   - solidifying the liquid slag by allowing it to cool;
   - crushing the slag to 3 mm size;
   - separating the metallic fraction of the slag using a magnetic separator; and
   - grinding the non-metallic fraction to 3000 to 4000 cm²/g depending upon its application.
2. The process as claimed in claim 1, wherein the fluorspar added for fluidizing the liquid slag is 3 %.
3. The process as claimed in claim 1, wherein a catalyst in the form of gypsum is mixed with the non-metallic fraction of the 3 mm slag before grinding.
4. The process as claimed in claims 1 or 3, wherein the grinding of the slag
   with or without gypsum is carried out to 3500 cm²/g.
5. The process as claimed in claim 1, wherein the cooling of the fluidized
   slag is carried out by granulating through a runner from a temperature range of 1500 to 1200 degrees centigrade.
6. The process as claimed in claim 1, wherein the cooling of the fluidized
   slag is carried out by quenching using water spray from a temperature range of 1500 to 1200 degrees centigrade.
7. The process as claimed in claim 1, wherein the construction material is a hydraulic binder for use in masonry blocks, flat sheets, bricks and tiles.

### DETAILED DESCRIPTION

After the steel has been tapped into the steel ladle, slag is removed from the steelmaking vessel in a slag pot. While slag is removed from the vessel, the slag is fluidized by adding fluorspar (calcium fluoride) of sufficient quantity in the slag pot. This enables the assimilation of the unmixed lime and also to some extent carryover metal or settle at the bottom of the slag pot. The pot is transferred to a nearest quenching pit to quench the slag. The slag can also be taken to a granulation pit, where the molten slag is granulated through a runner.

After quenching or granulating the slag is crushed to -3 mm size and passed through a magnetic separator to separate the metallic fraction of the slag.

The rest non-metallic slag is then crushed to 3500 blain depending upon the application. The magnetically separated metallic portion is suitable for iron bearing charge material in iron and steel making processes. The ground slag is suitable for varying applications including hydraulic binder in masonry blocks, flat sheets, and tiles and as a blend in cement manufacture and as a mortar in various applications.

For enhancing calcium silicate network during hydration the -3 mm non-metallic slag can be crushed with gypsum, which acts as a catalyst.

Pilot scale experimentation carried out in a running plant has established the process parameters necessary to obtain the cementitious phases by controlled cooling. Various aspects of the process that lead to instant flaking of the treated slag were identified. The range of process parameters has been listed in Table 1 below. The exact temperatures ranges and method of cooling are shown below:

### Table 1

Typical chemical composition obtained are shown in Table 2.

### Table 2:

Phases present:
[alpha]'-2CaO.SiO2 0-25% [beta]-2CaO.SiO2 20-50%

The slag can also be taken to a granulation pit, where the molten slag is granulated through a runner.

After quenching or granulating the slag is crushed to -3 mm size and passed through a magnetic separator to separate the metallic fraction of the slag.

The rest non-metallic slag is then crushed to 3500 blain (cm²/g) depending upon the application. The magnetically separated metallic portion is suitable for iron bearing charge material in iron and steel making processes. The ground slag is suitable for varying applications including hydraulic binder in masonry blocks, flat sheets, and tiles and as a blend in cement manufacture and as a mortar in various applications.

For enhancing calcium silicate network during hydration the -3 mm non-metallic slag can be crushed with gypsum, which acts as a catalyst.

Pilot scale experimentation carried out in a running plant has established the process parameters necessary to obtain the cementitious phases by controlled cooling. Various aspects of the process that lead to instant flaking of the treated slag were identified. The range of process parameters has been listed in Table 1 below. The exact temperatures ranges and method of cooling are shown below:

**Table 1:**

| **Parameter** | **Value** |
|---|---|
| Temperature of the slag | 1650 - 1400° C |
| Fluorspar | 0-3% |
| Cooling | By rapid quenching from a temperature range 1500 - 1200° C through either granulation process or water spray on thin slag layer. |
| Drying | As minimum as possible |
| Magnetic Separation | Magnetic separation to separate metallic slag and non metallic slag |
| Grinding with or without gypsum | 3000 - 4000 blain (cm²/g) |

Typical chemical composition obtained are shown in Table 2.

**Table 2:**

| Total Fe Fe(t) | CaO | SiO₂ | P₂O₅ | MgO | MnO | Al₂O₃ | TiO₂ | Cr₂O₃ | Free lime |
|---|---|---|---|---|---|---|---|---|---|
| 16-20 | 45-55 | 14-16 | 2.5-3.5 | 1-1.5 | 0.4-0.6 | 1-2 | 0.5-0.9 | 0.4-0.3 | 0-4 |

### Phases present:

- α'-2CaO.SiO₂ 0-25%
- β-2CaO.SiO₂ 20-50%
- 3CaO.SiO₂ 0-15%
- 2CaO.Fe₂O₃ 20-40%
- Ca(H₂PO₄)₂H₂O Minor
- Fe₂O₃ Minor
- Complex phases of CaO, Mgo, SiO₂, FeO, and Al₂O₃ - Minor

### Physical properties:

- Fineness 3000 - 3500 blain (cm²/g)
- IST (initial setting time) - 35 min
- FST (final setting time) - 45 min

### Strengths as per IS - 4031

- 7 day strength : 5-10 MPa
- 28 day strength : 15-30 MPa

The ground slag is suitable for part / complete replacement of cement depending upon the strength and application requirements. It can be used as a hydraulic binder in masonry blocks, fiber cement boards, tiles and as a mortar in various applications.

Solid bricks can be made out of the treated basic oxygen furnace slag using machine molding test results of the bricks at various loads are shown in Table 3 below:

**Table 3:**

| **Composition of the bricks** | | | | **Compressive strength, MPa** | | | |
|---|---|---|---|---|---|---|---|
| **F** | **S** | **HB** | **G** | **L** | **Load, t 9.5** | **Load, t 19** | **Load, t 28.5** |
| 47 | 30 | 20 | 3 | 0 | 11.8 | 15.6 | 16.7 |
| 37 | 30 | 30 | 3 | 0 | 15.8 | 19.6 | 18.8 |
| 50 | 17 | 20 | 10 | 3 | 17.5 | 24.9 | 32.1 |

| | | | | | | | |
|---|---|---|---|---|---|---|---|
| F-fly ash S-sand HB-treated slag G-gypsum L-lime | | | | | | | |

## Claims

1. A process for the conversion of basic oxygen furnace (BOF) slag into construction materials, a blend in cement manufacture and a mortar, said process comprising the steps of:
- adding 0 - 3 % of fluorspar to the molten slag for increasing the fluidity of said molten slag;
- solidifying the liquid slag by allowing it to cool;
- crushing the slag to 3 mm size;
- separating the metallic fraction of the slag using a magnetic separator; and
- grinding the non-metallic fraction to 3000 to 4000 cm²/g.

2. The process as claimed in claim 1, wherein the fluorspar added for fluidizing the liquid slag is 3 %.

3. The process as claimed in claim 1, wherein a catalyst in the form of gypsum is mixed with the non-metallic fraction of the 3 mm slag before grinding.

4. The process as claimed in claims 1 or 3, wherein the grinding of the slag with or without gypsum is carried out to 3500 cm²/g.

5. The process as claimed in claim 1, wherein the cooling of the fluidized slag is carried out by granulating through a runner from a temperature range of 1500 to 1200 degrees centigrade.

6. The process as claimed in claim 1, wherein the cooling of the fluidized slag is carried out by quenching using water spray from a temperature range of 1500 to 1200 degrees centigrade.

7. The process as claimed in claim 1, wherein the construction material is a hydraulic binder for use in masonry blocks, flat sheets, bricks and tiles.

## Patentansprüche

1. Verfahren zur Umwandlung von Sauerstoffaufblaskonverterschlacke (SAK-Schlacke) in Baumaterialien, ein Gemisch für die Zementherstellung und einen Mörtel, wobei das Verfahren die folgenden Schritte umfasst:
- Zugeben von 0 - 3 % Flussspat zu der Schlackenschmelze zum Erhöhen der Fluidität der Schlackenschmelze;
- Verfestigen der flüssigen Schlacke, indem sie abkühlen gelassen wird;
- Zerkleinern der Schlacke auf eine Größe von 3 mm;
- Trennen der metallischen Fraktion der Schlacke unter Verwendung eines Magnetabscheiders und
- Mahlen der nichtmetallischen Fraktion auf 3000 bis 4000 cm²/g.

2. Verfahren nach Anspruch 1, wobei der zum Fluidisieren der flüssigen Schlacke zugegebene Flussspat 3 % ausmacht.

3. Verfahren nach Anspruch 1, wobei ein Katalysator in der Form von Gips vor dem Mahlen mit der nichtmetallischen Fraktion der 3-mm-Schlacke gemischt wird.

4. Verfahren nach den Ansprüchen 1 oder 3, wobei das Mahlen der Schlacke mit oder ohne Gips auf 3500 cm²/g durchgeführt wird.

5. Verfahren nach Anspruch 1, wobei das Abkühlen der fluidisierten Schlacke durch Granulieren durch eine Abstichrinne bei einem Temperaturbereich von 1500 bis 1200 Grad Celsius durchgeführt wird.

6. Verfahren nach Anspruch 1, wobei das Abkühlen der fluidisierten Schlacke durch Abschrecken unter Verwendung eines Wasserschleiers bei einem Temperaturbereich von 1500 bis 1200 Grad Celsius durchgeführt wird.

7. Verfahren nach Anspruch 1, wobei das Baumaterial ein hydraulisches Bindemittel zur Verwendung in Mauersteinen, flachen Platten, Ziegeln und Fliesen ist.

## Revendications

1. Procédé pour la conversion de laitier de convertisseur basique à oxygène (CBO) en matériaux de construction, un mélange en fabrication de ciment et un mortier, ledit procédé comprenant les étapes consistant à :
- ajouter 0-3 % de spath-fluor au laitier en fusion pour augmenter la fluidité dudit laitier en fusion ;
- solidifier le laitier liquide en le laissant refroidir ;
- concasser le laitier à une taille de 3 mm ;
- séparer la fraction métallique du laitier à l'aide d'un séparateur magnétique ; et
- broyer la fraction non métallique à 3000 à 4000 cm²/g.

2. Procédé selon la revendication 1, dans lequel le spath-fluor ajouté pour fluidifier le laitier liquide est de 3 %.

3. Procédé selon la revendication 1, dans lequel un catalyseur sous la forme de gypse est mélangé avec la fraction non métallique du laitier à 3 mm avant broyage.

4. Procédé selon les revendications 1 ou 3, dans lequel le broyage du laitier avec ou sans gypse est effectué à 3500 cm²/g.

5. Procédé selon la revendication 1, dans lequel le refroidissement du laitier fluidifié est effectué par granulation dans un canal de coulée à partir d'une plage de température de 1500 à 1200 degrés Celsius.

6. Procédé selon la revendication 1, dans lequel le refroidissement du laitier fluidifié est effectué par refroidissement rapide à l'aide de pulvérisation d'eau à partir d'une plage de température de 1500 à 1200 degrés Celsius.

7. Procédé selon la revendication 1, dans lequel le matériau de construction est un liant hydraulique destiné à être utilisé dans des blocs de maçonnerie, des plaques planes, des briques et des tuiles.
